(19)

Europäisches
Patentamt
European
Patent Office
Office européen
des brevets

(11)  **EP 4 603 932 A1**

(12)  **EUROPEAN PATENT APPLICATION**
published in accordance with Art. 153(4) EPC

(43) Date of publication:
  **20.08.2025  Bulletin 2025/34**

(21) Application number: **23952929.0**

(22) Date of filing: **20.12.2023**

(51) International Patent Classification (IPC):
  **G05B 19/418** (2006.01)    **H01M 10/04** (2006.01)

(52) Cooperative Patent Classification (CPC):
  **Y02P 70/50**

(86) International application number:
  **PCT/CN2023/140420**

(87) International publication number:
  **WO 2025/060286 (27.03.2025 Gazette 2025/13)**

(84) Designated Contracting States:
  **AL AT BE BG CH CY CZ DE DK EE ES FI FR GB
  GR HR HU IE IS IT LI LT LU LV MC ME MK MT NL
  NO PL PT RO RS SE SI SK SM TR**
  Designated Extension States:
  **BA**
  Designated Validation States:
  **KH MA MD TN**

(30) Priority: **22.09.2023  CN 202311233416**

(71) Applicant: **Contemporary Amperex Technology
  (Hong Kong) Limited
  Central (HK)**

(72) Inventors:
  • **WU, Kai**
    **Ningde, Fujian 352100 (CN)**
  • **LUO, Jian**
    **Ningde, Fujian 352100 (CN)**
  • **WEI, Wenchao**
    **Ningde, Fujian 352100 (CN)**
  • **GU, Fangyuan**
    **Ningde, Fujian 352100 (CN)**

(74) Representative: **Ran, Handong et al
  Maucher Jenkins
  Seventh Floor Offices
  Artillery House
  11-19 Artillery Row
  London SW1P 1RT (GB)**

(54)  **BATTERY MANUFACTURING METHOD AND SYSTEM**

(57)  A battery production method and a battery production system are provided. The method includes: determining, by an upper-level computer, a quantity of first battery cells based on a current first production work order in a process of producing products by a production device in a first process of a battery production line; determining, by the upper-level computer, a quantity of second battery cells; when the quantity of the second battery cells is greater than or equal to the quantity of the first battery cells, sending, by the upper-level computer, a control instruction to a first production device in the first process, and taking a next first production work order as the current first production work order; determining, by a manufacturing execution system, a quantity of unfinished battery packs on a station device for a current second production work order and sending the quantity of the unfinished battery packs to the station device in a process of producing products by the station device in the second process of the battery production line; and when the quantity of the unfinished battery packs is zero, taking, by the station device, a next second production work order as the current second production work order.

An upper-level computer determines a quantity of first battery cells based on a current first production work order in a process of producing products by a production device in a first process of a battery production line — S401

The upper-level computer determines a quantity of second battery cells — S402

When the quantity of the second battery cells is greater than or equal to the quantity of the first battery cells, the upper-level computer sends a control instruction to a first production device in the first process, and taks a next first production work order as the current first production work order so as to complete switching of the first production work order — S403

A manufacturing execution system determines a quantity of unfinished battery packs on a station device for a current second production work order and sends the quantity of the unfinished battery packs to the station device in a process of producing products by the station device in a second process of the battery production line — S404

When the quantity of the unfinished battery packs is zero, the station device takes a next second production work order as the current second production work order so as to complete switching of the second production work order — S405

FIG. 4

EP 4 603 932 A1

**Description**

**CROSS-REFERENCE TO RELATED APPLICATIONS**

This disclosure is based on and claims priority to the Chinese Patent Application No. 202311233416.3, filed on September 22, 2023 and entitled "BATTERY PRODUCTION METHOD AND SYSTEM", which is incorporated herein by reference in its entirety.

**TECHNICAL FIELD**

This disclosure relates to a technology of switching production work orders in the production process of batteries, and in particular, to a battery production method and system.

**BACKGROUND**

New energy batteries are increasingly widely used in life and industry. For example, new energy vehicles equipped with batteries have been widely used. In addition, batteries are increasingly used in the field of energy storage, and the like.

At present, in the related art, in the production process of batteries, according to different working procedures, after a current production work order is completed, it is necessary to manually empty the materials on the whole line and re-edit the production work order for configuring new products. In this way, the whole product changeover requires several hours, which leads to low efficiency of changeover and low utilization of a production line. From this, it can be seen that the existing production work order switching has the technical problem of low utilization of the production line.

**SUMMARY**

Embodiments of this disclosure provide a battery production method and system, which can automatically switch production work orders and improve the utilization of a production line.

A technical solution of this disclosure is implemented as follows:

An embodiment of this disclosure provides a battery production method, applied to a battery production system. The battery production system includes an upper-level computer, a production device in a first process, a station device in a second process, and a manufacturing execution system. The above method may include:

determining, by the upper-level computer, a quantity of first battery cells based on a current first production work order in a process of producing products by the production device in the first process of a battery production line, where the quantity of the first battery cells is a quantity of battery cells actually required for the current first production work order;

determining, by the upper-level computer, a quantity of second battery cells, where the quantity of the second battery cells is a quantity of battery cells determined to be qualified for the current first production work order;

when the quantity of the second battery cells is greater than or equal to the quantity of the first battery cells, sending, by the upper-level computer, a control instruction to a first production device in the first process, and taking a next first production work order as the current first production work order so as to complete switching of the first production work order, where the control instruction is used for the first production device to stop working;

determining, by the manufacturing execution system, a quantity of unfinished battery packs on the station device for a current second production work order and sending the quantity of the unfinished battery packs to the station device in a process of producing products by the station device in the second process of the battery production line; and

when the quantity of the unfinished battery packs is zero, taking, by the station device, a next second production work order as the current second production work order so as to complete switching of the second production work order.

The upper-level computer compares the quantity of the battery cells actually required for the current first production work order and the quantity of the battery cells determined to be qualified, such that when the current first production work order is completed, the next first production work order can be automatically taken as the current first production work order, and the switching of the first production work order is intelligently completed. For the current second production work order, the switching of the second production work order can be realized through the interaction between the manufacturing execution system and the station device, the switching of the second production work order is intelligently completed, the changeover time of the whole production line is shortened, and thus the utilization of the production line is improved.

In an optional embodiment, the first production work order is a module production work order, and the second production work order is a battery pack production work order.

In this way, the automatic switching of the module production work order and the automatic switching of the battery pack (PACK) production work order are realized, the switching time of the production work orders in battery production is shortened, and the utilization of the production line in battery production is improved.

In an optional embodiment, the first production device in the first process is a battery cell go-online device, a second production device in the first process is a battery cell code scanning device, and correspondingly, the quantity of the first battery cells is a quantity of battery cells actually required to go online for the current first production work order; and the quantity of the second battery cells is a quantity of battery cells determined to be qualified to go online through battery cell code scanning for the current first production work order.

In this way, the quantity of the first battery cells can be determined by the battery cell go-online device, and the quantity of the second battery cells can be determined by the battery cell code scanning device, such that the automatic switching of the module production work order is realized, the switching time of the production work orders in battery production is shortened, and the utilization of the production line in battery production is improved.

In an optional embodiment, the determining, by the upper-level computer, a quantity of first battery cells based on a current first production work order in a process of producing products by the production device in the first process of a battery production line may include:

determining, by the upper-level computer, a quantity of third battery cells based on the current first production work order in the process of producing the products by the production device in the first process of the battery production line, where the quantity of the third battery cells is a quantity of battery cells theoretically required to go online for a current first module production work order;

acquiring, by the upper-level computer, a quantity of fourth battery cells, where the quantity of the fourth battery cells is a quantity of unqualified battery cells in the process of producing the products by the production device in the first process for the current first module production work order; and

determining, by the upper-level computer, a sum of the quantity of the third battery cells and the quantity of the fourth battery cells as the quantity of the first battery cells.

Through the above method, the quantity of the first battery cells not only includes the quantity of the battery cells theoretically required to go online, but also includes the quantity of the unqualified battery cells in the production process, such that the obtained quantity of the first battery cells can represent the quantity of the battery cells actually required to go online, which provides more accurate data support for the switching of the first production work order and is conducive to realizing the switching of the first production work order more accurately.

In an optional embodiment, the determining, by the upper-level computer, a quantity of third battery cells based on the current first production work order in the process of producing the products by the production device in the first process of the battery production line may include:

determining, by the upper-level computer, a product of a quantity of modules required in the current first production work order and a quantity of battery cells of a single module in the current first production work order as the quantity of the third battery cells in the process of producing the products by the production device in the first process of the battery production line.

Through the above method, the product of the quantity of the modules required and the quantity of the battery cells of the single module can be taken as the quantity of the third battery cells, the quantity of the first battery cells is calculated by using the quantity of the third battery cells so as to be used for switching the first production work order, the accuracy of the quantity of the battery cells actually required to go online is improved, and thus the switching accuracy is further improved.

In an optional embodiment, the production device in the first process includes a battery cell taping device and a module pressurizing device, and correspondingly, the acquiring, by the upper-level computer, a quantity of fourth battery cells may include:

receiving, by the upper-level computer, a quantity of fifth battery cells sent by a programmable logic controller, where the quantity of the fifth battery cells is a quantity of unqualified battery cells in battery cell taping of the battery cell taping device for the current first production work order;

determining, by the upper-level computer, a quantity of sixth battery cells, where the quantity of the sixth battery cells is a quantity of battery cells contained in unqualified modules in a module pressurizing process of the module pressurizing device for the current first production work order; and

determining, by the upper-level computer, the quantity of the fifth battery cells or the quantity of the sixth battery cells as the quantity of the fourth battery cells.

In this way, the upper-level computer may determine the quantity of the unqualified battery cells in the production of one production device or a plurality of production devices from other production devices and take the quantity of the unqualified battery cells as the quantity of the fourth battery cells, thereby being conducive to determining the quantity of the first battery cells, and thus being used for completing the automatic switching of the current first production work order more accurately and improving the utilization of the production line.

In an optional embodiment, the above method may further include:

determining, by the upper-level computer, a sum of the quantity of the fifth battery cells and the quantity of the sixth battery cells as the quantity of the fourth battery cells.

In this way, the quantity of the fourth battery cells not only includes the quantity of the unqualified battery cells in battery cell taping, but also includes the quantity of the battery cells contained in the unqualified modules in the module pressurizing process, such that the quantity of the fourth battery cells includes the quantity of the unqualified battery cells in the production of as many production devices as possible, thereby improving the accuracy of the quantity of the fourth battery cells, further improving the accuracy of the quantity of the first battery cells, and being conducive to realizing the automatic switching of the first production work order more accurately.

In an optional embodiment, the determining, by the upper-level computer, a quantity of sixth battery cells may include:

determining, by the upper-level computer, a quantity of the unqualified modules in the module pressurizing process of the module pressurizing device for the current first production work order; and
determining, by the upper-level computer, a product of the quantity of the unqualified modules and a quantity of battery cells of a single module in the current first production work order as the quantity of the sixth battery cells.

In this way, the quantity of the sixth battery cells can be determined, the quantity of the sixth battery cells can be directly determined as the quantity of the fourth battery cells, or the sum of the quantity of the sixth battery cells and the quantity of the fifth battery cells can be determined as the quantity of the fourth battery cells, so as to be used for determining the quantity of the first battery cells, thereby realizing the automatic switching of the first production work order.

In an optional embodiment, the sending, by the upper-level computer when the quantity of the second battery cells is greater than or equal to the quantity of the first battery cells, a control instruction to a first production device in the first process, and taking a next first production work order as the current first production work order so as to complete switching of the first production work order may include:

when the quantity of the second battery cells is greater than or equal to the quantity of the first battery cells, sending, by the upper-level computer, the control instruction to the first production device in the first process, and sending a switching request for the first production work order to the manufacturing execution system;
acquiring, by the manufacturing execution system, the next first production work order based on the switching request for the first production work order, and sending the next first production work order to the upper-level computer; and
taking, by the upper-level computer, the next first production work order as the current first production work order so as to complete switching of the first production work order.

In this way, the automatic switching of the first production work order is realized through the interaction with the manufacturing execution system, such that the time consumed by the switching of the first production work order is shortened, and thus the utilization of the production line is improved.

In an optional embodiment, the above method may further include:

after the sending, by the upper-level computer when the quantity of the second battery cells is greater than or equal to the quantity of the first battery cells, the control instruction to the first production device in the first process, and taking the next first production work order as the current first production work order so as to complete switching of the first production work order, returning to perform the determining, by the upper-level computer, a quantity of first battery cells based on a current first production work order in a process of producing products by the production device in the first process of a battery production line.

In this way, the first production work order is switched in sequence, such that the products on the production line correspond to the first production work order, and thus the continuous and automatic switching of the first production work order is realized.

In an optional embodiment, the determining, by the manufacturing execution system, a quantity of unfinished battery packs on the station device for a current second production work order and sending the quantity of the unfinished battery packs to the station device in a process of producing products by the station device in the second process of the battery production line may include:

determining, by the manufacturing execution system, a quantity of finished battery packs on the station device for the current second production work order in the process of producing the products by the station device in the second process of the battery production line; and

EP 4 603 932 A1

determining, by the manufacturing execution system, the quantity of the unfinished battery packs based on a quantity of battery packs required to be finished by the station device for the current second production work order and the quantity of the finished battery packs, and sending the quantity of the unfinished battery packs to the station device.

In this way, the quantity of the unfinished battery packs can be determined by the pre-stored quantity of the battery packs required to be finished by the station device for the current second production work order and the acquired quantity of the finished battery packs on the station device determined for the current second production work order, so as to be used for judging whether it is time to switch the second production work order, which is conducive to the automatic switching of the second production work order, and thus improving the utilization of the production line.

In an optional embodiment, the determining, by the manufacturing execution system, a quantity of finished battery packs on the station device for the current second production work order in the process of producing the products by the station device in the second process of the battery production line may include:

separately scanning, by the station device, codes of the battery packs entering and leaving a station to obtain a quantity of battery packs entering and leaving the station;
sending, by the station device, the quantity of the battery packs entering and leaving the station to the manufacturing execution system; and
determining, by the manufacturing execution system, the quantity of the battery packs entering and leaving the station as the quantity of the finished battery packs.

In this way, the quantity of the finished battery packs can be obtained by counting the quantity of the battery packs with the codes successfully scanned to enter the station and successfully scanned to leave the station through the station device, so as to determine whether it is time to switch the second production work order, the intelligent switching of the second production work order is realized, and the utilization of the production line is improved.

In an optional embodiment, the taking, by the station device when the quantity of the unfinished battery packs is zero, a next second production work order as the current second production work order so as to complete switching of the second production work order may include:

when the quantity of the unfinished battery packs is zero, sending, by the station device, a switching request for the second production work order of the station device to the manufacturing execution system;
acquiring, by the manufacturing execution system, the next second production work order based on the switching request for the second production work order of the station device, and sending the next second production work order to the station device; and
taking, by the station device, the next second production work order as the current second production work order so as to complete switching of the second production work order.

In this way, each station device can complete the automatic switching of the second production work order through the interaction with the manufacturing execution system, which shortens the time consumed by the switching of the second production work order, realizes the intelligent switching of the second production work order and improves the utilization of the production line.

An embodiment of this disclosure provides a battery production system, including an upper-level computer, a production device in a first process, a station device in a second process, and a manufacturing execution system, where

the upper-level computer is configured to determine a quantity of first battery cells based on a current first production work order in a process of producing products by the production device in the first process of a battery production line, where the quantity of the first battery cells is a quantity of battery cells actually required for the current first production work order;
the upper-level computer is configured to determine a quantity of second battery cells, where the quantity of the second battery cells is a quantity of battery cells determined to be qualified for the current first production work order;
the upper-level computer is configured to: when the quantity of the second battery cells is greater than or equal to the quantity of the first battery cells, send a control instruction to a first production device in the first process, and take a next first production work order as the current first production work order so as to complete switching of the first production work order, where the control instruction is used for the first production device to stop working;
the manufacturing execution system is configured to determine a quantity of unfinished battery packs on the station device for a current second production work order and send the quantity of the unfinished battery packs to the station device in a process of producing products by the station device in the second process of the battery production line; and
the station device is configured to: when the quantity of the unfinished battery packs is zero, take a next second production work order as the current second production work order so as to complete switching of the second production work order.

The upper-level computer compares the quantity of the battery cells actually required for the current first production work order and the quantity of the battery cells determined to be qualified, such that when the current first production work order is completed, the next first production work order can be automatically taken as the current first production work order, and the switching of the first production work order is intelligently completed. For the current second production work order, the switching of the second production work order can be realized through the interaction between the manufacturing execution system and the station device, the switching of the second production work order is intelligently completed, the changeover time of the whole production line is shortened, and thus the utilization of the production line is improved.

In an optional embodiment, the first production work order is a module production work order, and the second production work order is a battery pack production work order.

In this way, the automatic switching of the module production work order and the automatic switching of the PACK production work order are realized, the switching time of the production work orders in battery production is shortened, and the utilization of the production line in battery production is improved.

In an optional embodiment, the first production device in the first process is a battery cell go-online device, a second production device in the first process is a battery cell code scanning device, and correspondingly, the quantity of the first battery cells is a quantity of battery cells actually required to go online for the current first production work order; and the quantity of the second battery cells is a quantity of battery cells determined to be qualified to go online through battery cell code scanning for the current first production work order.

In this way, the quantity of the first battery cells can be determined by the battery cell go-online device, and the quantity of the second battery cells can be determined by the battery cell code scanning device, such that the automatic switching of the module production work order is realized, the switching time of the production work orders in battery production is shortened, and the utilization of the production line in battery production is improved.

In an optional embodiment, the upper-level computer is further configured to:

determine a quantity of third battery cells based on the current first production work order in the process of producing the products by the production device in the first process of the battery production line, where the quantity of the third battery cells is a quantity of battery cells theoretically required to go online for the current first production work order;
acquire a quantity of fourth battery cells, where the quantity of the fourth battery cells is a quantity of unqualified battery cells in the process of producing the products by the production device in the first process for the current first production work order; and
determine, by the upper-level computer, a sum of the quantity of the third battery cells and the quantity of the fourth battery cells as the quantity of the first battery cells.

In this way, the quantity of the first battery cells not only includes the quantity of the battery cells theoretically required to go online, but also includes the quantity of the unqualified battery cells in the production process, such that the obtained quantity of the first battery cells can represent the quantity of the battery cells actually required to go online, which provides more accurate data support for the switching of the first production work order and is conducive to realizing the switching of the first production work order more accurately.

In an optional embodiment, the upper-level computer is further configured to:
determine a product of a quantity of modules required in the current first production work order and a quantity of battery cells of a single module in the current first production work order as the quantity of the third battery cells in the process of producing the products by the production device in the first process of the battery production line.

In this way, the product of the quantity of the modules required and the quantity of the battery cells of the single module can be taken as the quantity of the third battery cells, the quantity of the first battery cells is calculated by using the quantity of the third battery cells so as to be used for switching the first production work order, the accuracy of the quantity of the battery cells actually required to go online is improved, and thus the switching accuracy is further improved.

In an optional embodiment, the production device in the first process includes a battery cell taping device and a module pressurizing device, and correspondingly, the upper-level computer is further configured to:

receive a quantity of fifth battery cells sent by a programmable logic controller, where the quantity of the fifth battery cells is a quantity of unqualified battery cells in battery cell taping of the battery cell taping device for the current first production work order;
determine a quantity of sixth battery cells, where the quantity of the sixth battery cells is a quantity of battery cells contained in unqualified modules in a module pressurizing process of the module pressurizing device for the current first production work order; and

determine the quantity of the fifth battery cells or the quantity of the sixth battery cells as the quantity of the fourth battery cells.

In this way, the upper-level computer may determine the quantity of the unqualified battery cells in the production of one production device or a plurality of production devices from other production devices and take the quantity of the unqualified battery cells as the quantity of the fourth battery cells, thereby being conducive to determining the quantity of the first battery cells, and thus being used for completing the automatic switching of the current first production work order more accurately and improving the utilization of the production line.

In an optional embodiment, the upper-level computer is further configured to: determine a sum of the quantity of the fifth battery cells and the quantity of the sixth battery cells as the quantity of the fourth battery cells.

In this way, the quantity of the fourth battery cells not only includes the quantity of the unqualified battery cells in battery cell taping, but also includes the quantity of the battery cells contained in the unqualified modules in the module pressurizing process, such that the quantity of the fourth battery cells includes the quantity of the unqualified battery cells in the production of as many production devices as possible, thereby improving the accuracy of the quantity of the fourth battery cells, further improving the accuracy of the quantity of the first battery cells, and being conducive to realizing the automatic switching of the first production work order more accurately.

In an optional embodiment, the upper-level computer is further configured to:

determine a quantity of unqualified modules in the module pressurizing process of the module pressurizing device for the current first production work order; and

determine a product of the quantity of the unqualified modules and a quantity of battery cells of a single module in the current first production work order as the quantity of the sixth battery cells.

In this way, the quantity of the sixth battery cells can be determined, the quantity of the sixth battery cells can be directly determined as the quantity of the fourth battery cells, or the sum of the quantity of the sixth battery cells and the quantity of the fifth battery cells can be determined as the quantity of the fourth battery cells, so as to be used for determining the quantity of the first battery cells, thereby realizing the automatic switching of the first production work order.

In an optional embodiment,

the upper-level computer is further configured to: when the quantity of the second battery cells is greater than or equal to the quantity of the first battery cells, send the control instruction to the first production device in the first process, and send a switching request for the first production work order to the manufacturing execution system;

the manufacturing execution system is further configured to acquire the next first production work order based on the switching request for the first production work order, and send the next first production work order to the upper-level computer; and

the upper-level computer is further configured to take the next first production work order as the current first production work order so as to complete switching of the first production work order.

In this way, the automatic switching of the first production work order is realized through the interaction with the manufacturing execution system, such that the time consumed by the switching of the first production work order is shortened, and thus the utilization of the production line is improved.

In an optional embodiment, the upper-level computer is further configured to: after the sending, when the quantity of the second battery cells is greater than or equal to the quantity of the first battery cells, the control instruction to the first production device in the first process, and taking the next first production work order as the current first production work order so as to complete switching of the first production work order, return to perform determining the quantity of the first battery cells based on the current first production work order in the process of producing the products by the production device in the first process of the battery production line.

In this way, the first production work order is switched in sequence, such that the products on the production line correspond to the first production work order, and thus the continuous and automatic switching of the first production work order is realized.

In an optional embodiment, the manufacturing execution system is further configured to:

determine a quantity of finished battery packs on the station device for the current second production work order in the process of producing the products by the station device in the second process of the battery production line; and

determine the quantity of the unfinished battery packs based on a quantity of battery packs required to be finished by the station device for the current second production work order and the quantity of the finished battery packs.

In this way, the quantity of the unfinished battery packs can be determined by the pre-stored quantity of the battery packs required to be finished by the station device for the current second production work order and the acquired quantity of the finished battery packs on the station device determined for the current second production work order, so as to be used for judging whether it is time to switch the second production work order, which is conducive to the automatic switching of the second production work order, and thus improving the utilization of the production line.

In an optional embodiment,

the station device is further configured to separately scan codes of the battery packs entering and leaving a station to obtain a quantity of battery packs entering and leaving the station, and send the quantity of battery packs entering and leaving the station to the manufacturing execution system; and

the manufacturing execution system is further configured to determine the quantity of the battery packs entering and leaving the station as the quantity of the finished battery packs.

In this way, the quantity of the finished battery packs can be obtained by counting the quantity of the battery packs with the codes successfully scanned to enter the station and successfully scanned to leave the station through the station device, so as to determine whether it is time to switch the second production work order, the intelligent switching of the second production work order is realized, and the utilization of the production line is improved.

In an optional embodiment,

the station device is further configured to: when the quantity of the unfinished battery packs is zero, send a switching request for the second production work order of the station device to the manufacturing execution system;

the manufacturing execution system is further configured to acquire the next second production work order based on the switching request for the second production work order of the station device, and send the next second production work order to the station device; and

the station device is further configured to take the next second production work order as the current second production work order so as to complete switching of the second production work order.

In this way, each station device can complete the automatic switching of the second production work order through the interaction with the manufacturing execution system, which shortens the time consumed by the switching of the second production work order, realizes the intelligent switching of the second production work order and improves the utilization of the production line.

The embodiments of this disclosure provide the battery production method and system. The method is applied to the battery production system. The system includes the upper-level computer, the production device in the first process, the station device in the second process, and the manufacturing execution system. The method may include: determining, by the upper-level computer, the quantity of the first battery cells based on the current first production work order in the process of producing the products by the production device in the first process of the battery production line, where the quantity of the first battery cells is the quantity of the battery cells actually required for the current first production work order; determining, by the upper-level computer, the quantity of the second battery cells, where the quantity of the second battery cells is the quantity of the battery cells determined to be qualified for the current first production work order; when the quantity of the second battery cells is greater than or equal to the quantity of the first battery cells, sending, by the upper-level computer, the control instruction to the first production device in the first process, and taking the next first production work order as the current first production work order so as to complete switching of the first production work order, where the control instruction is used for the first production device to stop working; determining, by the manufacturing execution system, the quantity of the unfinished battery packs on the station device for the current second production work order and sending the quantity of the unfinished battery packs to the station device in the process of producing the products by the station device in the second process of the battery production line; and when the quantity of the unfinished battery packs is zero, taking, by the station device, the next second production work order as the current second production work order so as to complete switching of the second production work order. That is, in the embodiments of this disclosure, in the first process of the battery production line, through the determined quantity of the battery cells actually required for the current first production work order and the quantity of the qualified battery cells for the current first production work order, namely the quantity of the first battery cells and the quantity of the second battery cells, in a case that the quantity of the second battery cells is greater than or equal to the quantity of the first battery cells, the upper-level computer sends the control instruction to the first production device, such that the first production device stops working, and the next first production work order is taken as the current first production work order. In addition, in the second process of the battery production line, the manufacturing execution system sends the quantity of the unfinished battery packs by the station device determined for the current second production work order to the station device, such that when the station device determines to complete the task of the current second production work order based on the quantity of the unfinished battery packs, the next second production work order is taken as the current second production work order, thereby realizing automatic switching of the second production work order. In this way, the switching between the first production work order and the second production work order is intelligently completed, the changeover time for switching the production work orders of the production line is shortened, and thus the utilization of the production line is improved.

**BRIEF DESCRIPTION OF DRAWINGS**

FIG. 1 is a schematic diagram of a module process according to an embodiment of this disclosure;
FIG. 2 is a process diagram for producing a PACK according to an embodiment of this disclosure;
FIG. 3 is a schematic structural diagram of a battery production system according to an embodiment of this disclosure;
FIG. 4 is a schematic flowchart of a battery production method according to an embodiment of this disclosure;
FIG. 5 is a schematic flowchart of an example of a switching method for a module production work order according to an embodiment of this disclosure; and
FIG. 6 is a schematic flowchart of an example of a switching method for a PACK production work order according to an embodiment of this disclosure.

**DETAILED DESCRIPTION OF EMBODIMENTS**

The following describes technical solutions in embodiments of this disclosure clearly and completely with reference to the accompanying drawings in the embodiments of this disclosure.

At present, new energy batteries are more and more widely used in life and industry. The new energy batteries are not only used in energy storage power systems such as hydro, thermal, wind, and solar power stations, but also widely used in electric means of transport such as electric bicycles, electric motorcycles, and electric vehicles, and used in many other fields such as aerospace. The market demand for traction batteries keeps soaring with the increase of the application fields of the traction batteries.

In the embodiments of this disclosure, a battery may be a battery cell (sometimes called a cell) or a battery module or a battery pack (sometimes called a PACK) including a plurality of battery cells. The battery cell refers to a basic unit that can realize the mutual conversion between chemical energy and electric energy, and can be used to make battery modules or battery packs, so as to supply power to electrical apparatuses. The battery cell may be a secondary battery, and the secondary battery is a battery cell that is reusable through activation of an active material in the battery cell by charging the battery cell that is discharged. The battery cell may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickelcadmium battery, a lead storage battery, or the like. The specific type of the battery cell is not limited by the embodiments of this disclosure.

In the battery production process, at least two processes may be included, namely, a first process and a second process. In the embodiments of this disclosure, the first process may be a battery module production process, and the second process may be a PACK production process.

For the first process, when a first production work order changes, it takes a lot of time to manually switch the first production work order in the related art, which leads to low utilization of a production line. To improve the utilization of the production line, in the embodiments of this disclosure, an upper-level computer may be used to switch the first production work order.

The first process targeted by the embodiments of this disclosure may be the battery module production process, where for the production of a module, a production line of the module may include production devices: a battery cell go-online device, a battery cell code scanning device, a side taping device, a side taping detection device, a battery cell stacking device, a module pressurizing device and a module code scanning device. In addition, the production line may further include an upper-level computer, a Programmable Logic Controller (Programmable Logic Controller, PLC) and a Manufacturing Execution System (Manufacturing Execution System, MES), where the upper-level computer is respectively in communication connection to the foregoing production devices, the PLC and the MES for switching the module production work order.

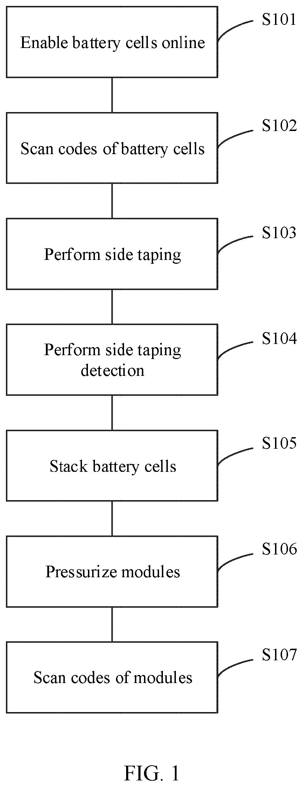

FIG. 1 is a schematic diagram of a module process according to an embodiment of this disclosure. As shown in FIG. 1, the above module process sequentially may include:

S101: Enable battery cells online,
where the battery cells going online is a first station of a module section.
S102: Scan codes of battery cells,
where a quantity A of battery cells qualified to go online can be obtained from this process.
S103: Perform side taping.

S104: Perform side taping detection,

where a quantity B of battery cells unqualified through detection can be obtained from this process.

S105: Stack battery cells.

S106: Pressurize modules,

where a quantity C of unqualified modules in the module pressurizing process can be obtained from this process.

S107: Scan codes of modules,

where code scanning for the modules is a terminal station of the module section.

The battery cell go-online device enables the battery cells to go online, the battery cell code scanning device performs code scanning for the battery cells, the side taping device performs side taping for the battery cells, the battery cell stacking device stacks the battery cells, the module pressurizing device pressurizes the modules, and the module code scanning device performs code scanning for the modules.

It should be noted that the modules in the embodiments of this disclosure may be square-shell battery cell modules, or cylindrical battery cell modules, or pouch cell modules, which is not specifically limited in the embodiments of this disclosure herein.

In addition, for the second process, when a second production work order changes, it takes a lot of time to manually switch the second production work order in the related art, which leads to low utilization of the production line. To improve the utilization of the production line, in the embodiments of this disclosure, the manufacturing execution system may be used to interact with a station device to complete the switching of the second production work order.

The second process targeted by the embodiments of this disclosure may be the PACK production process, where for the production of the PACK, a production line of the PACK may include the station device: a lower case go-online device, a water-cooled flange installation device, a balance valve installation device, a lower case gluing device, a gluing detection device, a module put-in-case device, a module pre-screwing device, a module tightening device, a pole addressing device, a Ceramic Coating Separator (Ceramic Coating Separator, CCS) installation device, a laser (BSB) welding device, a post-welding detection device, an insulating film sticking device, an SBOX installation device, a low-voltage wiring harness installation device, a PACK high voltage installation device, an SBOX upper cover installation device, a tape strapping device, a gasket installation device, an upper cover tightening device, an air tightness testing device, an End of Line (EOL) testing device, a direct current resistance (DCR) testing device, an appearance detection device and a weighing and go-offline device. In the above station device, devices that need to switch the second production work order may include: three module put-in-case devices, one pole addressing device, one CCS installation device, one BSB welding device, one lower case gluing device, one weighing and go-offline device, one SBOX installation device, one air tightness testing device, one EOL testing device and one DCR testing device. In addition, the production line of the PACK may further include an MES, which is configured to interact with the devices that need to switch the second production work order, so as to realize switching of the second production work order.

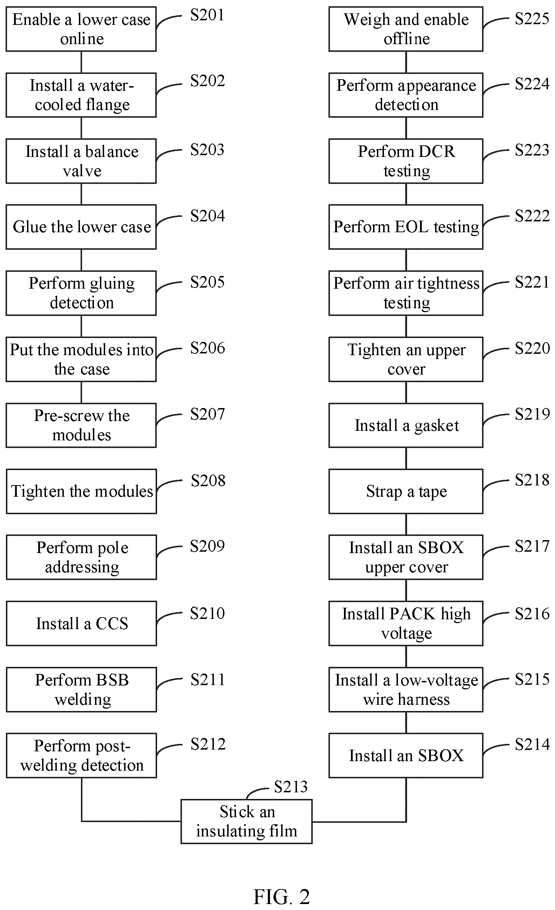

FIG. 2 is a schematic diagram of a PACK process according to an embodiment of this disclosure. As shown in FIG. 2, the above PACK process sequentially may include:

S201: Enable a lower case online,

where the lower case go-online device serves as a first station device in a PACK section, and mainly enables the lower case to go online.

S202: Install a water-cooled flange,

here, after obtaining the lower case, the water-cooled flange installation device installs the water-cooled flange on the lower case.

S203: Install a balance valve,

where after installing the water-cooled flange on the lower case, the balance valve installation device installs the balance valve on the lower case.

S204: Glue the lower case,

where after the balance valve is installed on the lower case, the lower case gluing device glues the lower case.

S205: Perform gluing detection,

where after gluing the lower case, the gluing detection device detects the gluing of the lower case.

S206: Put the modules into the case,

here, after the gluing of the lower case is detected, the module put-in-case device puts the modules into the lower case.

S207: Pre-screw the modules,

where after the modules are put into the lower case, the module pre-screwing device pre-screws the lower case in which the modules are put.

S208: Tighten the modules,

where after the module pre-screwing process, the module tightening device tightens the pre-screwed lower case.

S209: Perform pole addressing,

where after the module tightening process, the pole addressing device performs pole addressing on the lower case.

S210: Install a CCS,

where after the pole addressing process, the CCS installation device installs the CCS on the lower case.

S211: Perform BSB welding,

where after the CCS installation process, the BSB welding device performs BSB welding on the lower case.

S212: Perform post-welding detection,

here, after BSB welding, the post-welding detection device performs post-welding detection on the lower case.

S213: Stick an insulating film,

where after the post-welding detection process, the insulating film sticking device sticks the insulating film on the lower case.

S214: Install an SBOX,

where after the insulating film sticking process, the SBOX installation device installs the SBOX on the lower case.

S215: Install a low-voltage wire harness,

where after the SBOX installation process, the low-voltage wiring harness installation device installs the low-voltage wiring harness on the lower case.

S216: Install PACK high voltage,

here, after the low-voltage wire harness installation process, the PACK high voltage installation device installs the PACK high voltage on the lower case.

S217: Install an SBOX upper cover,

where after installing the PACK high voltage, the SBOX upper cover installation device installs the SBOX upper cover on the lower case.

S218: Strap a tape,

here, after the SBOX upper cover installation process, the tape strapping device straps the tape on the lower case.

S219: Install a gasket,

where after the tape strapping process, the gasket installation device installs the gasket on the lower case.

S220: Tighten an upper cover,

where after the gasket installation process, the upper cover tightening device tightens the upper cover on the lower case.

S221: Perform air tightness testing,

here, after the upper cover tightening process, the air tightness testing device performs air tightness testing on the lower case.

S222: Perform EOL testing,

where after the air tightness testing, the EOL testing device performs the EOL testing on the lower case.

S223: Perform DCR testing,

here, after the EOL testing process, the DCR testing device performs the DCR testing on the lower case.

S224: Perform appearance detection,

where after the DCR testing process, the appearance detection device performs the appearance testing on the lower case, and a product that passes the appearance testing can be called a battery pack.

S225: Weigh and enable offline,

where the weighing and enabling offline are the last process of the PACK section, and the weighing and go-offline device weighs the battery pack and enables the battery pack offline. In this way, all the processes of the whole PACK section can be completed, and thus the battery pack is obtained.

It should be noted that the PACK in the embodiments of this disclosure may be called a battery pack or a battery box.

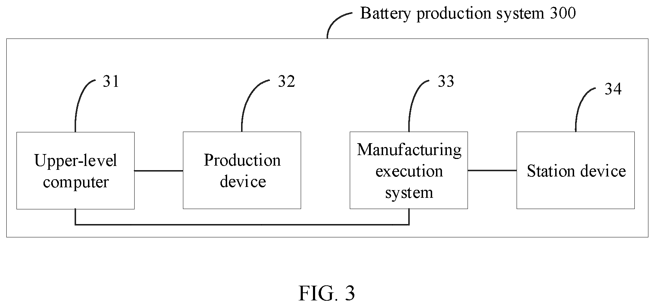

An embodiment of this disclosure provides a battery production method, and the method is applied to a battery production system. FIG. 3 is a schematic structural diagram of a battery production system according to an embodiment of this disclosure. As shown in FIG. 3, the battery production system 300 may include an upper-level computer 31, a production device 32, a manufacturing execution system 33 and a station device 34. A plurality of production devices 32 may be included, the upper-level computer 31 is in communication connection to the production device 32, a plurality of station devices 34 may be included, and the manufacturing execution system 33 is in communication connection to the station device 34. Here, the upper-level computer 31, the production device 32 and the manufacturing execution system 33 are configured to realize the first process, such that a module can be obtained. The manufacturing execution system 33 and the station device 34 are configured to realize the second process, such that a battery pack or a battery box can be obtained.

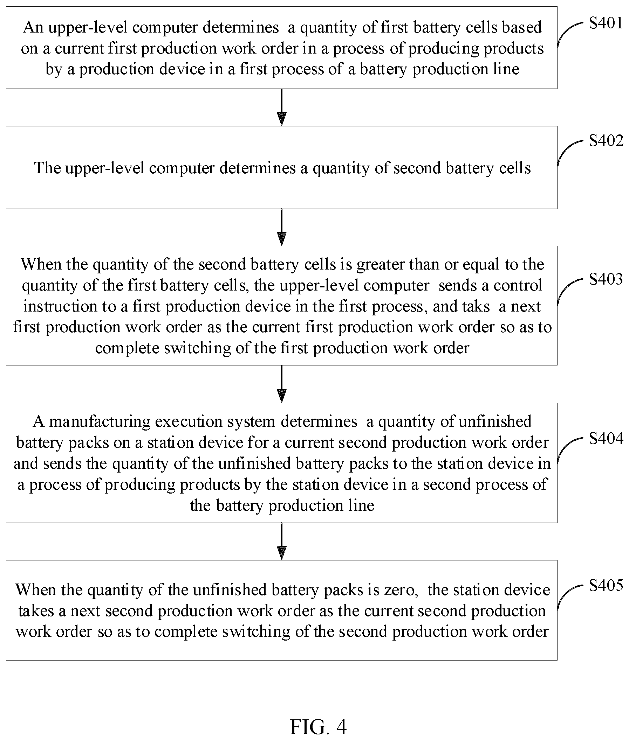

Based on the battery production system 300 provided in FIG. 3, an embodiment of this disclosure provides a battery production method. FIG. 4 is a schematic flowchart of a battery production method according to an embodiment of this disclosure. As shown in FIG. 4, the battery production method may include:

S401: The upper-level computer determines a quantity of first battery cells based on a current first production work order in a process of producing products by the production device in the first process of a battery production line.

In S401, in the production line corresponding to the first process, the current first production work order is stored in the upper-level computer, and the upper-level computer may determine the quantity of the first battery cells according to the current first production work order in the process of producing the products by the production device in the first process of the battery production line, where the current first production work order may include: a product type of a new work order, a module code of the new work order, quantity information of to-be-produced products of the new work order, and the like, such that a current produced product type, a current produced module code and current to-be-produced product quantity information can be known through the current first production work order.

The above quantity of the first battery cells is a quantity of battery cells actually required for the current first production work order. Here, unqualified battery cells are generated in the process of producing the products by the production device in the first process of the battery production line, for example, unqualified battery cells are generated during side taping, unqualified battery cells are generated during module pressurization, and loss of the battery cells will occur in view of the unqualified battery cells. Therefore, the quantity of the battery cells actually required for the current first production work order is greater than a quantity of battery cells theoretically required for the current first production work order.

Then, here, in the process of producing the products by the production device in the first process of the battery production line, the upper-level computer may determine the quantity of the first battery cells according to the current first production work order by considering the quantity of the unqualified battery cells in the production process, and the quantity of the first battery cells is compared with a quantity of second battery cells so as to be used for automatic switching of the first production work order.

S402: The upper-level computer determines the quantity of the second battery cells.

After the quantity of the first battery cells is determined by the upper-level computer in S401, to realize the automatic switching of the first production work order, in S402, the upper-level computer determines the quantity of the second battery cells, where the quantity of the second battery cells is a quantity of battery cells determined to be qualified for the current first production work order, that is, during the corresponding production of the battery cells by the production device in the first process, for example, during battery cell code scanning, the quantity of the qualified battery cells, namely the quantity of the second battery cells can be determined through a battery cell code scanning device, such that the upper-level computer can obtain the quantity of the second battery cells.

The upper-level computer can know the quantity of the qualified battery cells in the process of producing the products by the production device in the first process of the battery production line after obtaining the quantity of the qualified battery cells for the current first production work order, so as to compare the quantity of the qualified battery cells with the quantity of the first battery cells to determine whether it is time to switch the first production work order. When it is time to switch the first production work order, the first production work order is switched, such that the work order is switched more reasonably on the premise of not affecting the current first production work order, which is conducive to switching the production line and improving the utilization of the production line.

S403: When the quantity of the second battery cells is greater than or equal to the quantity of the first battery cells, the upper-level computer sends a control instruction to a first production device in the first process, and takes a next first production work order as the current first production work order so as to complete switching of the first production work order.

After the quantity of the first battery cells is determined in S401 and the quantity of the second battery cells is determined in S402, in S403, the quantity of the second battery cells and the quantity of the first battery cells are compared. When the quantity of the second battery cells is greater than or equal to the quantity of the first battery cells, that is, the quantity of the qualified battery cells is greater than or equal to the quantity of the battery cells actually required, it means that for the current first production work order, the quantity of the qualified battery cells can meet the demand of the current first production work order at this time. Therefore, battery cells are not needed, so the upper-level computer sends the control instruction to the first production device in the first process, where the control instruction is used for the first production device to stop working. Therefore, when the quantity of the second battery cells is greater than or equal to the quantity of the first battery cells, acquisition of new battery cells can be stopped for the first process, and the next first production work order can be taken as the current first production work order on the premise of normal production of the current first production work order, so as to complete the switching of the first production work order.

That is, when the quantity of the second battery cells is greater than or equal to the quantity of the first battery cells, the acquisition of new battery cells is stopped, and the next first production work order is also taken as the current first production work order to realize the switching of the first production work order. This is because when the quantity of the second battery cells is greater than or equal to the quantity of the first battery cells, for the current first production work order, the quantity of the qualified battery cells can meet the demand of the current first production work order, and the next first production work order needs to be executed to continue the production of the next first production work order. Therefore, here, the next first production work order is taken as the current first production work order to realize the automatic switching of the first production work order, thereby improving the utilization of the production line.

S404: The manufacturing execution system determines a quantity of unfinished battery packs on the station device for a current second production work order and sends the quantity of the unfinished battery packs to the station device in a process of producing products by the station device in the second process of the battery production line.

After the first process is completed, the next process, namely the second process, needs to be performed. In S404, in the process of producing the products by the station device in the second process of the battery production line, the products are transported by using an Automatic Guided Vehicle (Automatic Guided Vehicle, AGV), and after receiving the products, the station device performs corresponding processes on the products, thereby completing the second process. A quantity of the station device may be one or more, a discontinuous station exists between the station devices, and resources are configured for each station to interact with the manufacturing execution system.

In S404, the manufacturing execution system determines the quantity of the unfinished battery packs on the station device for the current second production work order in the process of producing the products by the station device in the second process of the battery production line, where one or more station devices may be provided here. When a plurality of station devices are provided, for the current second production work order of each station device, the manufacturing execution system determines the quantity of the unfinished battery packs and sends the quantity of the unfinished battery packs to the station device.

S405: When the quantity of the unfinished battery packs is zero, the station device takes a next second production work order as the current second production work order so as to complete switching of the second production work order.

Through S404, the station device receives the quantity of the unfinished battery packs, and judges whether the quantity of the unfinished battery packs is zero to determine whether it is time to switch the second production work order. If the quantity of the unfinished battery packs is not zero, it means that for the current second production work order, the station device has not finished all the tasks, that is, all the products on the current second production work order are not finished, so it is not necessary to switch the second production work order at this time. If the quantity of the unfinished battery packs is zero, it means that for the current second production work order, the station device has finished all the tasks, that is, all the products on the current second production work order are finished, so it is necessary to switch the second production work order at this time.

Then, when the second production work order needs to be switched, the next second production work order is taken as the current second production work order, thereby completing the switching of the second production work order.

In this way, the upper-level computer in the first process determines the switching time to realize the automatic switching of the first production work order, and the manufacturing execution system in the second process and the station device in each station determine the switching time to realize the automatic switching of the second production work order, thereby improving the utilization of the production line.

For the first production work order and the second production work order, in an optional embodiment, the first production work order is a module production work order, and the second production work order is a battery pack production work order.

It can be understood that the first production work order is the production work order of the first process, and the first process is a module production process, that is, the first production work order is the module production work order. The second production work order is the production work order of the second process, and the second process is a battery pack production process, that is, the second production work order is the battery pack production work order.

In this way, according to the embodiments of this disclosure, the module production work order is automatically switched by the upper-level computer, and the battery pack production work order is automatically switched by the interaction between the manufacturing execution system and the station device, so as to shorten the changeover time of the whole production line and improve the utilization of the whole production line.

Aiming at the fact that the first production work order is the module production work order, in an optional embodiment, the first production device in the first process is a battery cell go-online device, a second production device in the first process is a battery cell code scanning device, and correspondingly, the quantity of the first battery cells is a quantity of battery cells actually required to go online for the current first production work order, and the quantity of the second battery cells is a quantity of battery cells determined to be qualified to go online through battery cell code scanning for the current first production work order.

It can be understood that when the first production work order is the module production work order, since the first production device of the production device in the first process is the battery cell go-online device and the second production device is the battery cell code scanning device, to determine the quantity of the battery cells actually required for the first production work order, here, the upper-level computer only needs to determine the quantity of the battery cells actually required to go online for the current first production work order based on the current first production work order.

In addition, to determine the quantity of the battery cells determined to be qualified for the current first production work order, here, the upper-level computer determines the quantity of the battery cells determined to be qualified to go online through battery cell code scanning of the battery cell code scanning device for the current first production work order.

Battery cell code scanning, as the second process for module production, is a process after the battery cells go online. The quantity of the battery cells actually put into other processes of modules during module production can be known from the battery cell code scanning device, so as to be compared with the quantity of the first battery cells to determine whether it is time to switch the first production work order. When it is time to switch the first production work order, the work order is switched, such that the work order is switched more reasonably on the premise of not affecting each first production work order, which is conducive to switching the production line and improving the utilization of the production line.

In this way, the automatic switching of the module production work order and the automatic switching of the PACK production work order are realized, the switching time of the production work orders in battery production is shortened, and the utilization of the production line in battery production is improved.

To determine the quantity of the first battery cells based on the current first production work order, in an optional embodiment, S401 may include:

the upper-level computer determines a quantity of third battery cells based on the current first production work order in the process of producing the products by the production device in the first process of the battery production line;
the upper-level computer acquires a quantity of fourth battery cells; and
the upper-level computer determines a sum of the quantity of the third battery cells and the quantity of the fourth battery cells as the quantity of the first battery cells.

It can be understood that to determine the quantity of the first battery cells, the upper-level computer determines the quantity of the third battery cells based on the current first production work order, where the quantity of the third battery cells is a quantity of battery cells theoretically required to go online for the current first production work order. That is, the upper-level computer needs to determine the quantity of the battery cells theoretically required to go online for the current first production work order based on information in the current first production work order, where the quantity of the third battery cells may be directly acquired from the current first production work order or acquired by calculation based on data in the current first production work order, which is not specifically limited in the embodiments of this disclosure herein.

In addition, the upper-level computer acquires the quantity of the fourth battery cells, where the quantity of the fourth battery cells is a quantity of unqualified battery cells in the process of producing the products by the production device in the first process for the current first production work order, that is, the upper-level computer needs to acquire the quantity of unqualified battery cells generated in the production process for the current first production work order, and the production process here may include the production of one process or the production of a plurality of processes in the above module process, which is not specifically limited in the embodiments of this disclosure herein.

After the upper-level computer determines the quantity of the third battery cells and the quantity of the fourth battery cells, the sum of the quantity of the third battery cells and the quantity of the fourth battery cells can be taken as the quantity of the first battery cells. That is, the quantity of the battery cells actually required to go online for the current first production work order is equal to the sum of the quantity of the battery cells theoretically required to go online for the current first production work order and the quantity of the unqualified battery cells in the production process for the current first production work order. Therefore, the quantity of the first battery cells not only includes the quantity of the battery cells theoretically required to go online, but also includes the quantity of the unqualified battery cells in the production process, such that the obtained quantity of the first battery cells can actually represent the quantity of the battery cells actually required to go online, which provides more accurate data support for the switching of the first production work order and is conducive to realizing the switching of the first production work order more accurately.

The above-mentioned quantity of the third battery cells may be directly acquired from the current first production work order, or acquired by calculation based on the data in the current first production work order. Then, to acquire the quantity of the third battery cells by calculation based on the data in the current first production work order, in an optional embodiment, the step that the upper-level computer determines a quantity of third battery cells based on the current first production work order in the process of producing the products by the production device in the first process of the battery production line may include:
the upper-level computer determines a product of a quantity of modules required in the current first production work order and a quantity of battery cells of a single module in the current first production work order as the quantity of the third battery cells in the process of producing the products by the production device in the first process of the battery production line.

It can be understood that the upper-level computer may acquire the quantity of the modules required from the current first production work order, and may also acquire the quantity of the battery cells of the single module from the current first production work order, and then multiply the quantity of the modules required with the quantity of the battery cells of the single module to determine the obtained product as the quantity of the third battery cells, that is, the quantity of the battery cells theoretically required to go online for the current first production work order.

In theory, battery cells unqualified to not form modules in the module production process are not considered. Therefore, only the product of the quantity of the modules required and the quantity of the battery cells of the single module is taken as the quantity of the third battery cells, such that the quantity of the first battery cells is calculated by using the quantity of the third battery cells so as to be used for the switching of the first production work order.

To acquire the quantity of the fourth battery cells so as to obtain the quantity of the first battery cells, in an optional embodiment, the production device in the first process includes a battery cell taping device and a module pressurizing device, and correspondingly, the step that the upper-level computer acquires a quantity of fourth battery cells may include:

the upper-level computer receives a quantity of fifth battery cells sent by a programmable logic controller;
the upper-level computer determines a quantity of sixth battery cells; and
the upper-level computer determines the quantity of the fifth battery cells or the quantity of the sixth battery cells as the quantity of the fourth battery cells.

It can be understood that to obtain the quantity of the fourth battery cells, the upper-level computer receives the quantity of the fifth battery cells sent by the PLC, where the quantity of the fifth battery cells is a quantity of unqualified battery cells in battery cell taping of the battery cell taping device for the current first production work order. Here, the PLC is in communication connection to the battery cell taping device, and the quantity of the unqualified battery cells in battery cell taping can be known and then is sent to the upper-level computer, such that the upper-level computer can acquire the quantity of the fifth battery cells. That is, the upper-level computer may receive the quantity of the unqualified battery cells in battery cell taping for the current first production work order from the PLC, so as to be used for determining the quantity of the fourth battery cells.

The upper-level computer determines the quantity of the sixth battery cells, where the quantity of the sixth battery cells is a quantity of battery cells contained in unqualified modules in a module pressurizing process of the module pressurizing device for the current first production work order. Based on the communication connection between the upper-level computer and the module pressurizing device, the quantity of unqualified modules in the module pressurizing process may be acquired from the module pressurizing device, and then the quantity of the sixth battery cells is determined based on the quantity of the unqualified modules in the module pressurizing process.

After determining the quantity of the fifth battery cells and the quantity of the sixth battery cells, the upper-level computer may determine the quantity of the fifth battery cells as the quantity of the fourth battery cells or the quantity of the sixth battery cells as the quantity of the fourth battery cells, which is not specifically limited in the embodiments of this disclosure herein.

In this way, the upper-level computer may determine the quantity of the unqualified battery cells in the production of one process or production of a plurality of processes from the production device in the first process and take the quantity of the unqualified battery cells as the quantity of the fourth battery cells, thereby being conducive to determining the quantity of the first battery cells, and thus being used for completing the automatic switching of the current first production work order more accurately and improving the utilization of the production line.

Further, to improve the accuracy of the quantity of the fourth battery cells, in an optional embodiment, the above method may further include:
the upper-level computer determines a sum of the quantity of the fifth battery cells and the quantity of the sixth battery cells as the quantity of the fourth battery cells.

It can be understood that after determining the quantity of the fifth battery cells and the quantity of the sixth battery cells, the upper-level computer may determine the quantity of the fifth battery cells as the quantity of the fourth battery cells, or the quantity of the sixth battery cells as the quantity of the fifth battery cells, or also determine the sum of the quantity of the fifth battery cells and the quantity of the sixth battery cells as the quantity of the fourth battery cells.

In this way, the quantity of the fourth battery cells not only includes the quantity of the unqualified battery cells in battery cell taping, but also includes the quantity of the battery cells contained in the unqualified modules in the module pressurizing process, such that the quantity of the fourth battery cells includes the quantity of the unqualified battery cells in the production of as many production devices as possible, thereby improving the accuracy of the quantity of the fourth battery cells, further improving the accuracy of the quantity of the first battery cells, and being conducive to realizing the automatic switching of the first production work order more accurately.

To determine the quantity of the sixth battery cells, in an optional embodiment, the step that the upper-level computer determines a quantity of sixth battery cells may include:

the upper-level computer determines a quantity of the unqualified modules in the module pressurizing process of the module pressurizing device for the current first production work order; and
the upper-level computer determines a product of the quantity of the unqualified modules and a quantity of battery cells of a single module in the current first production work order as the quantity of the sixth battery cells.

It can be understood that the upper-level computer may count the quantity of the unqualified modules in the module pressurizing process for the current first production work order. Here, the upper-level computer may acquire the quantity of the unqualified modules in the module pressurizing process for the current first production work order from the module pressurizing device. Since the current first production work order further includes the quantity of the battery cells of the single module, here, after determining the quantity of the unqualified modules in the module pressurizing process for the current first production work order, the upper-level computer multiplies the quantity of the unqualified modules in the module pressurizing process with the quantity of the battery cells of the single module to determine the product as the quantity of the sixth battery cells.

In this way, the quantity of the sixth battery cells can be determined, the quantity of the sixth battery cells can be directly determined as the quantity of the fourth battery cells, or the sum of the quantity of the sixth battery cells and the quantity of the fifth battery cells can be determined as the quantity of the fourth battery cells, so as to be used for determining the quantity of the first battery cells, thereby realizing the automatic switching of the first production work order.

To realize switching of the first production work order, in an optional embodiment, S403 may include:

when the quantity of the second battery cells is greater than or equal to the quantity of the first battery cells, the upper-level computer sends the control instruction to the first production device in the first process, and sends a switching request for the first production work order to the manufacturing execution system;
the manufacturing execution system acquires the next first production work order based on the switching request for the first production work order, and sends the next first production work order to the upper-level computer; and
the upper-level computer takes the next first production work order as the current first production work order so as to complete switching of the first production work order.

It can be understood that since the first production device in the first process is a battery cell go-online device, after comparison, when the quantity of the second battery cells is greater than or equal to the quantity of the first battery cells, the upper-level computer sends the control instruction to the battery cell go-online device to stop the battery cell go-online device from working, such that battery cells will not go online any more, that is, new battery cells will not go online in the whole module production line, and the switching request for the first production work order will be sent to the manufacturing execution system. That is, not only will the control instruction be sent to the battery cell go-online device, but also the switching request for the first production work order is sent to the manufacturing execution system.

Then, after receiving the switching request for the first production work order, the manufacturing execution system acquires the next first production work order according to the switching request for the first production work order, where the required first production work order is stored in the manufacturing execution system. The upper-level computer generates a response message of the switching request for the first production work order based on the next first production work order, the response message of the switching request for the first production work order is sent to the upper-level computer, the upper-level computer receives the response message of the switching request for the first production work order from the manufacturing execution system, where the response message includes the next first production work order, such that the upper-level computer may take the next first production work order as the current first production work order, thereby realizing the automatic switching of the first production work order.

It can be seen that the upper-level computer may obtain the next first production work order through interaction with the manufacturing execution system, and take the next first production work order as the current first production work order after acquiring the next first production work order. In this way, the automatic switching of the first production work order is realized through the interaction with the manufacturing execution system, such that the time consumed by the switching of the first production work order is shortened, and thus the utilization of the production line is improved.

In addition, the above switching method for the first production work order may be switching once or continuous switching for many times. In the case of continuous switching for many times, in an optional embodiment, the above method may further include:

after the sending, by the upper-level computer when the quantity of the second battery cells is greater than or equal to the quantity of the first battery cells, the control instruction to the battery cell go-online device, and taking the next first production work order as the current first production work order so as to complete switching of the first production work order, returning to perform the determining, by the upper-level computer, the quantity of the first battery cells based on the current first production work order in the process of producing the products by the production device in the first process of the battery production line.

It can be understood that after S403, that is, after switching of the first production work order is completed, S401 is re-executed, that is, after S401-S403 are executed once, S401-S403 are executed again, and loop execution is implemented, such that the whole production line can switch the first production work order continuously, and the time consumed by the switching of the first production work order every time is shortened.

It should be noted that in the case of continuous switching for many times, a plurality of first production work orders need to be stored in the manufacturing execution system according to a production sequence, and the switching request from the upper-level computer should be responded in sequence, such that the first production work orders can be switched in sequence, and the products on the production line correspond to the first production work orders, thereby improving the utilization of the production line.

It should be noted that when the quantity of the second battery cells is compared with the quantity of the first battery cells, it is found that the quantity of the second battery cells is greater than or equal to the quantity of the first battery cells, and it is also found that the quantity of the second battery cells is less than the quantity of the first battery cells. For the case that the quantity of the second battery cells is less than the quantity of the first battery cells, at this time, the quantity of battery cells determined to be qualified to go online by battery cell code scanning is less than the quantity of the battery cells actually required to go online, that is, the quantity of the battery cells qualified to go online by code scanning cannot meet the demand of the current first production work order, and therefore, the first production work order is not switched.

To realize that the manufacturing execution system determines the quantity of the unfinished battery packs on the station device for the current second production work order, in an optional embodiment, S404 may include:

the manufacturing execution system determines a quantity of finished battery packs on the station device for the current second production work order in the process of producing the products by the station device in the second process of the battery production line; and

the manufacturing execution system determines the quantity of the unfinished battery packs based on a quantity of battery packs required to be finished by the station device for the current second production work order and the quantity of the finished battery packs, and sends the quantity of the unfinished battery packs to the station device.

It can be understood that the manufacturing execution system may first determine the quantity of the finished battery packs on the station device for the current second production work order, and then the quantity of the battery packs required to be finished by the station device for the current second production work order is pre-stored in the manufacturing execution system under the condition that the quantity of the finished battery packs is known, so a difference obtained by subtracting the quantity of the finished battery packs from the quantity of the battery packs required to be finished is the quantity of the unfinished battery packs.

In this way, the quantity of the unfinished battery packs can be determined by the pre-stored quantity of the battery packs required to be finished by the station device for the current second production work order and the acquired quantity of the finished battery packs on the station device determined for the current second production work order, so as to be used for judging whether it is time to switch the second production work order, which is conducive to the automatic switching of the second production work order, and thus improving the utilization of the production line.

To realize that the manufacturing execution system determines the quantity of the finished battery packs on the station device for the current second production work order, in an optional embodiment, the step that the manufacturing execution system determines a quantity of finished battery packs on the station device for the current second production work order in the process of producing the products by the station device in the second process of the battery production line may include:

the station device separately scans codes of the battery packs entering and leaving a station to obtain a quantity of battery packs entering and leaving the station;

the station device sends the quantity of the battery packs entering and leaving the station to the manufacturing execution system; and

the manufacturing execution system determines the quantity of the battery packs entering and leaving the station as the quantity of the finished battery packs.

It can be understood that when the products transported by the AGV arrive at the station, the station device performs entering-station code scanning on PACK codes of the products, and then performs the corresponding processes on the products. After completing the corresponding processes, the station device performs leaving-station code scanning on the PACK codes of the products. Here, the station device may determine the quantity of the finished battery packs through entering-station and leaving-station code scanning records.

The station device counts the quantity of the battery packs entering and leaving the station in the process of scanning the codes of the battery packs entering and leaving the station, and the counted quantity is the quantity of the finished battery packs. That is, the battery packs with the codes successfully scanned to enter the station and successfully scanned to leave the station are the finished battery packs, and the corresponding quantity is the quantity of the finished battery packs.

In this way, the quantity of the finished battery packs can be obtained by counting the quantity of the battery packs with the codes successfully scanned to enter the station and successfully scanned to leave the station through the station device, so as to determine whether it is time to switch the second production work order, the intelligent switching of the second production work order is realized, and the utilization of the production line is improved.

To complete switching of the second production work order, in an optional embodiment, S405 may include:

when the quantity of the unfinished battery packs is zero, the station device sends a switching request for the second production work order of the station device to the manufacturing execution system;

the manufacturing execution system acquires the next second production work order based on the switching request for the second production work order of the station device, and sends the next second production work order to the station device; and

the station device takes the next second production work order as the current second production work order so as to complete switching of the second production work order.

It can be understood that after receiving the quantity of the unfinished battery packs, the station device judges whether the quantity of the unfinished battery packs is zero. If the quantity of the unfinished battery packs is not zero, it means that for the current second production work order, the station device has not finished all the tasks, that is, all the products on the current second production work order are not finished, so it is not necessary to switch the second production work order at this time. If the quantity of the unfinished battery packs is zero, it means that for the current second production work order, the station device has finished all the tasks, that is, all the products on the current second production work order are finished, so it is necessary to switch the second production work order at this time.

To realize switching of the second production work order, when it is determined that the quantity of the unfinished battery packs is zero, the station device sends the switching request for the second production work order of the station device to the manufacturing execution system, and the switching request is used for the manufacturing execution system to acquire the next second production work order.

The manufacturing execution system receives the switching request for the second production work order of the station device, acquires the next second production work order based on the switching request for the second production work order of the station device, and send the switching request to the station device, such that the station device takes the next second production work order acquired from the manufacturing execution system as the current second production work order.

The manufacturing execution system may carry the next second production work order to a response message of the switching request for the second production work order of the station device, and send the response message to the station device, such that the station device can acquire the next second production work order.

The station device acquires the next second production work order as the current second production work order, such that the intelligent switching of the second production work order is realized after the station device completely completes the tasks of the current second production work order.

In this way, each station device can complete the automatic switching of the second production work order through the interaction with the manufacturing execution system, which shortens the time consumed by the switching of the second production work order, realizes the intelligent switching of the second production work order and improves the utilization of the production line.

Next, the battery production method in one or more of the above embodiments will be described with examples.

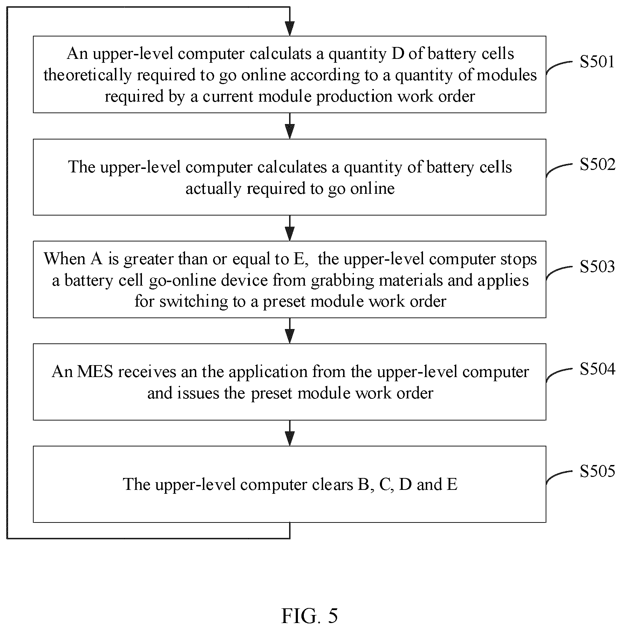

In this example, to realize the production of batteries, it is necessary to automatically complete the switching of the module production work order and switching of the PACK production work order. FIG. 5 is a schematic flowchart of an example of a switching method for a module production work order according to an embodiment of this disclosure. As shown in FIG. 5, the specific steps are as follows:

S501: An upper-level computer calculates a quantity D of battery cells theoretically required to go online according to a quantity of modules required by a current module production work order.

Specifically, the upper-level computer may obtain the quantity of the required modules and the quantity of battery cells of a single module from the current module production work order, and D is obtained by calculation through the following formula (1):

$$F \times G = D \qquad\qquad (1)$$

where F represents the quantity of required modules, and G represents the quantity of battery cells of a single module.

S502: The upper-level computer calculates a quantity of battery cells actually required to go online.

Specifically, the quantity of the battery cells actually required to go online is calculated through the following formula (2):

$$D + B + C \times G = E \qquad\qquad (2)$$

where B represents a quantity of battery cells that are unqualified (NG) in taping (equivalent to a quantity of battery cells unqualified in battery cell taping of the above current module production work order), and C represents a quantity of NG modules (equivalent to a quantity of battery cells contained in unqualified modules in the module pressurizing process of the above current module production work order), where E represents the quantity of battery cells actually required to go online.

S503: When A is greater than or equal to E, the upper-level computer stops a battery cell go-online device from grabbing materials and applies for switching to a preset module work order.

A represents a quantity of battery cells qualified in code scanning to go online, and when A is greater than or equal to E, the quantity of the battery cells going online can meet the module production required by the work order. Specifically, the upper-level computer stops the battery cell go-online device from grabbing the materials by sending a control instruction to the battery cell go-online device, and the upper-level computer sends a switching request to an MES to realize the application for switching to the preset module work order.

S504: The MES receives the application from the upper-level computer and issues the preset module work order.

Specifically, after receiving the switching request, the MES sends the preset module work order to the upper-level computer, where the preset module work order may include a product type of a new work order, a module code of the new work order, and quantity information of to-be-produced products of the new work order, such that the distribution of the product type of the new work order, the module code of the new work order, and the quantity information of the to-be-produced products of the new work order can be realized.

S505: The upper-level computer clears B, C, D and E, and returns to execute S501.

Specifically, after acquiring the preset module work order, the upper-level computer recalculates A, B, C, D and E, and then returns to execute S501 to S505.

In this example, after the production of the current module production work order is completed, switching of the subsequent to-be-produced module work order is automatically triggered, such that the devices on the production line can automatically acquire the subsequent product information without stopping, the product work order can be automatically switched without stopping, and the efficiency of the devices is greatly improved.

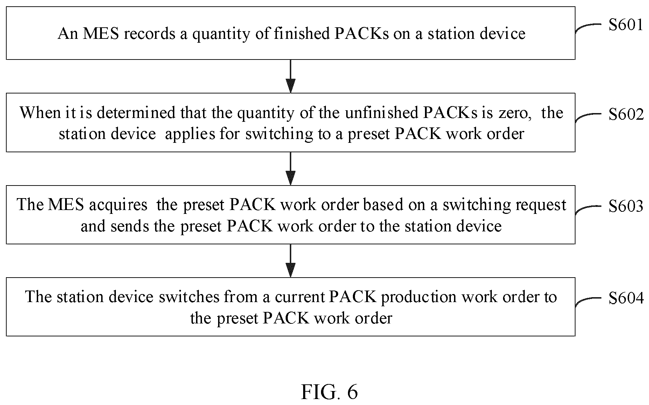

In this example, to automatically complete the switching of the PACK production work order, FIG. 6 is a schematic flowchart of an example of a switching method for a PACK production work order according to an embodiment of this disclosure. As shown in FIG. 6, the specific steps are as follows:

S601: An MES records a quantity of finished PACKs on a station device.

Specifically, the PACK section is different from the module section. PACK products are transported by an AGV, the AGV transports one PACK at a time, and stations of the PACK section are discontinuous stations, so resources are configured for each individual station to interact with the MES.

When each station works, it is necessary to apply for entering/leaving the station by using a PACK code. The MES records the quantity of the finished PACKs on the station in real time, compares the quantity of the finished PACKs with a quantity of PACKs configured by a current PACK production work order to obtain a quantity of unfinished PACKs in the current PACK production work order, and sends the quantity of the unfinished PACKs to the station device.

S602: When it is determined that the quantity of the unfinished PACKs is zero, the station device applies for switching to a preset PACK work order.

Specifically, the station device receives the quantity of the unfinished PACKs in the current PACK production work order that is fed back by the MES, and when the quantity of the unfinished PACKs is "0", that is, the current PACK production work order task has been completed, an application is triggered to switch from the current PACK production work order to the preset PACK work order (equivalent to the above next PACK production work order), specifically, the station device sends a switching request to the MES.

S603: The MES acquires the preset PACK work order based on the switching request and sends the preset PACK work order to the station device.

S604: The station device switches from the current PACK production work order to the preset PACK work order.

Specifically, the MES receives the switching request, acquires the preset PACK work order and issues the preset PACK work order to the station device. The station device switches from the current PACK production work order to the preset PACK work order and issues product type information of the new work order.

In this example, after the production of the current PACK production work order is completed, switching of the subsequent to-be-produced PACK work order is automatically triggered, such that the station device can automatically acquire the subsequent product information without stopping, the product work order can be automatically switched without stopping, and the efficiency of the device is greatly improved.

The embodiments of this disclosure provide the battery production method. The method is applied to the battery production system. The system includes the upper-level computer, the production device in the first process, the station device in the second process, and the manufacturing execution system. The method may include: determining, by the upper-level computer, the quantity of the first battery cells based on the current first production work order in the process of producing the products by the production device in the first process of the battery production line, where the quantity of the first battery cells is the quantity of the battery cells actually required for the current first production work order; determining, by the upper-level computer, the quantity of the second battery cells, where the quantity of the second battery cells is the quantity of the battery cells determined to be qualified for the current first production work order; when the quantity of the second battery cells is greater than or equal to the quantity of the first battery cells, sending, by the upper-level computer, the control instruction to the first production device in the first process, and taking the next first production work order as the current first production work order so as to complete switching of the first production work order, where the control instruction is used for the first production device to stop working; determining, by the manufacturing execution system, the quantity of the unfinished battery packs on the station device for the current second production work order and sending the quantity of the unfinished battery packs to the station device in the process of producing the products by the station device in the second process of the battery production line; and when the quantity of the unfinished battery packs is zero, taking, by the station device, the next second production work order as the current second production work order so as to complete switching of the second production work order. That is, in the embodiments of this disclosure, in the first process of the battery production line, through the determined quantity of the battery cells actually required for the current first production work order and the quantity of the qualified battery cells for the current first production work order, namely the quantity of the first battery cells and the quantity of the second battery cells, in a case that the quantity of the second battery cells is greater than or equal to the quantity of the first battery cells, the upper-level computer sends the control instruction to the first production device, such that the first production device stops working, and the next first production work order is taken as the current first production work order. In addition, in the second process of the battery production line, the manufacturing execution system sends the quantity of the unfinished battery packs by the station device determined for the current second production work order to the station device, such that when the station device determines to complete the task of the current second production work order based on the quantity of the unfinished battery packs, the next second production work order is taken as the current second production work order, thereby realizing automatic switching of the second production work order. In this way, the switching between the first production work order and the second production work order is intelligently completed, the changeover time for switching the production work orders of the production line is shortened, and thus the utilization of the production line is improved.

Based on the same inventive concept as the above embodiments, an embodiment of this disclosure provides a battery production system. As shown in FIG. 3, the battery production system 300 may include:

an upper-level computer 31, configured to determine a quantity of first battery cells based on a current first production work order in a process of producing products by a production device 32 in a first process of a battery production line, where the quantity of the first battery cells is a quantity of battery cells actually required for the current first production work order;

the upper-level computer 31, configured to determine a quantity of second battery cells, where the quantity of the second battery cells is a quantity of battery cells determined to be qualified for the current first production work order;

the upper-level computer 31, configured to: when the quantity of the second battery cells is greater than or equal to the quantity of the first battery cells, send a control instruction to a first production device in the first process, and take a next first production work order as the current first production work order so as to complete switching of the first production work order, where the control instruction is used for the first production device to stop working;

a manufacturing execution system 33, configured to determine a quantity of unfinished battery packs on a station device 34 for a current second production work order and send the quantity of the unfinished battery packs to the station device 34 in a process of producing products by the station device 34 in a second process of the battery production line; and

the station device 34, configured to: when the quantity of the unfinished battery packs is zero, take a next second production work order as the current second production work order so as to complete switching of the second production work order.

In an optional embodiment, the first production work order is a module production work order, and the second production work order is a battery pack production work order.

In an optional embodiment, the first production device in the first process is a battery cell go-online device, a second production device in the first process is a battery cell code scanning device, and correspondingly,

the quantity of the first battery cells is a quantity of battery cells actually required to go online for the current first production work order; and the quantity of the second battery cells is a quantity of battery cells determined to be qualified to go online through battery cell code scanning for the current first production work order.

In an optional embodiment, the upper-level computer 31 is further configured to:

determine a quantity of third battery cells based on the current first production work order in the process of producing the products by the production device in the first process of the battery production line, where the quantity of the third battery cells is a quantity of battery cells theoretically required to go online for the current first production work order; acquire a quantity of fourth battery cells, where the quantity of the fourth battery cells is a quantity of unqualified battery cells in the process of producing the products by the production device 32 in the first process for the current first production work order; and

determine a sum of the quantity of the third battery cells and the quantity of the fourth battery cells as the quantity of the first battery cells.

In an optional embodiment, the upper-level computer 31 is further configured to:
determine a product of a quantity of modules required in the current first production work order and a quantity of battery cells of a single module in the current first production work order as the quantity of the third battery cells in the process of producing the products by the production device 32 in the first process of the battery production line.

In an optional embodiment, the production device in the first process includes a battery cell taping device and a module pressurizing device, and correspondingly, the upper-level computer 31 is further configured to:

receive a quantity of fifth battery cells sent by a programmable logic controller, where the quantity of the fifth battery cells is a quantity of unqualified battery cells in battery cell taping of the battery cell taping device for the current first production work order;
determine a quantity of sixth battery cells, where the quantity of the sixth battery cells is a quantity of battery cells contained in unqualified modules in a module pressurizing process of the module pressurizing device for the current first production work order; and
determine the quantity of the fifth battery cells or the quantity of the sixth battery cells as the quantity of the fourth battery cells.

In an optional embodiment, the upper-level computer 31 is further configured to:
determine a sum of the quantity of the fifth battery cells and the quantity of the sixth battery cells as the quantity of the fourth battery cells.

In an optional embodiment, the upper-level computer 31 is further configured to:

determine a quantity of unqualified modules in the module pressurizing process of the module pressurizing device for the current first production work order; and
determine a product of the quantity of the unqualified modules and a quantity of battery cells of a single module in the current first production work order as the quantity of the sixth battery cells.

In an optional embodiment, the upper-level computer 31 is further configured to:

when the quantity of the second battery cells is greater than or equal to the quantity of the first battery cells, send the control instruction to the first production device in the first process, and send a switching request for the first production work order to the manufacturing execution system 33;
the manufacturing execution system 33 is further configured to acquire the next first production work order based on the switching request for the first production work order, and send the next first production work order to the upper-level computer 31; and
the upper-level computer 31 is further configured to take the next first production work order as the current first production work order so as to complete switching of the first production work order.

In an optional embodiment, the upper-level computer 31 is further configured to:
after the sending, when the quantity of the second battery cells is greater than or equal to the quantity of the first battery cells, the control instruction to the first production device in the first process, and taking the next first production work order as the current first production work order so as to complete switching of the first production work order, return to perform the determining the quantity of the first battery cells based on the current first production work order in the process of producing the products by the production device 32 in the first process of the battery production line.

In an optional embodiment, the manufacturing execution system 33 is further configured to:

determine a quantity of finished battery packs on the station device 34 for the current second production work order in the process of producing the products by the station device 34 in the second process of the battery production line; and
determine the quantity of the unfinished battery packs based on a quantity of battery packs required to be finished by the station device 34 for the current second production work order and the quantity of the finished battery packs.

In an optional embodiment, the station device 34 is further configured to:

separately scan codes of the battery packs entering and leaving a station to obtain a quantity of battery packs entering and leaving the station, and send the quantity of battery packs entering and leaving the station to the manufacturing execution system 33; and

the manufacturing execution system 33 is further configured to determine the quantity of the battery packs entering and leaving the station as the quantity of the finished battery packs.

In an optional embodiment, the manufacturing execution system 33 is further configured to:

determine a quantity of unfinished battery packs on the station device 34 for the current second production work order and send the quantity of the unfinished battery packs to the station device 34;

the station device 34 is further configured to: when the quantity of the unfinished battery packs is zero, send a switching request for the second production work order of the station device 34 to the manufacturing execution system 33;

the manufacturing execution system 33 is further configured to acquire the next second production work order based on the switching request for the second production work order of the station device 34, and send the next second production work order to the station device 34; and

the station device 34 is further configured to take the next second production work order as the current second production work order so as to complete switching of the second production work order.

A person skilled in the art understands that the embodiments of this disclosure may be provided as a method, a system, or a computer program product. Therefore, this disclosure may adopt the form of hardware embodiments, software embodiments, or software-and-hardware embodiments. Moreover, this disclosure may adopt the form of a computer program product that is implemented on one or more computer-operable storage media (including but not limited to a disk memory, an optical memory, and the like) that store computer-executable program code.

This disclosure is described with reference to flowcharts and/or block diagrams of the method, device (system), and computer program product according to the embodiments of this disclosure. It should be understood that computer program instructions may implement each process and/or block in the flowchart and/or block diagram, or implement a combination of processes and/or blocks in the flowchart and/or block diagram. The computer program instructions may be provided for a universal computer, a dedicated computer, an embedded processor, or a processor of other programmable data processing devices to bring forth a machine, such that the instructions executed by the computer or the processor of other programmable data processing devices bring forth an apparatus that is configured to implement functions specified in one or more processes in a flowchart and/or one or more blocks in a block diagram.

The computer program instructions may also be stored in a computer-readable memory that can guide the computer or other programmable data processing devices to work in a specific manner, such that the instructions stored in the computer-readable memory generate a product that includes an instruction apparatus. The instruction apparatus implements functions specified in one or more processes in the flowchart and/or one or more blocks in the block diagram.

The computer program instructions may be loaded onto the computer or other programmable data processing devices, such that a series of operations and steps are performed on the computer or other programmable devices, thereby generating computer-implemented processing. Therefore, the instructions executed on the computer or other programmable devices provide steps for implementing functions specified in one or more processes in the flowchart and/or one or more blocks in the block diagram.

What is described above is merely preferred embodiments of this disclosure, but not intended to limit the protection scope of this disclosure.

Industrial practicality

The embodiments of this disclosure provide the battery production method and system. The method is applied to the battery production system. The system includes the upper-level computer, the production device in the first process, the station device in the second process, and the manufacturing execution system. The method may include: determining, by the upper-level computer, the quantity of the first battery cells based on the current first production work order in the process of producing the products by the production device in the first process of the battery production line, where the quantity of the first battery cells is the quantity of the battery cells actually required for the current first production work order; determining, by the upper-level computer, the quantity of the second battery cells, where the quantity of the second battery cells is the quantity of the battery cells determined to be qualified for the current first production work order; when the quantity of the second battery cells is greater than or equal to the quantity of the first battery cells, sending, by the upper-level computer, the control instruction to the first production device in the first process, and taking the next first production work order as the current first production work order so as to complete switching of the first production work order, where the control instruction is used for the first production device to stop working; determining, by the manufacturing execution system, the quantity of the unfinished battery packs on the station device for the current second production work order and sending the quantity of the unfinished battery packs to the station device in the process of producing the products by the station device in the second process of the battery production line; and when the quantity of the unfinished battery packs is zero, taking, by the station device, the next second production work order as the current second production work order so as to complete switching of the second production work order. That is, in the embodiments of this disclosure, in the first process of the battery production line, through the determined quantity of the battery cells actually required for the current first production work order and the quantity of the qualified battery cells for the current first production work order, namely the quantity of the first battery cells and the quantity of the second battery cells, in a case that the quantity of the second battery cells is greater than or equal to the quantity of the first battery cells, the upper-level computer sends the control instruction to the first production device, such that the first production device stops working, and the next first production work order is taken as the current first production work order. In addition, in the second process of the battery production line, the manufacturing execution system sends the quantity of the unfinished battery packs by the station device determined for the current second production work order to the station device, such that when the station device determines to complete the task of the current second production work order based on the quantity of the unfinished battery packs, the next second production work order is taken as the current second production work order, thereby realizing automatic switching of the second production work order. In this way, the switching between the first production work order and the second production work order is intelligently completed, the changeover time for switching the production work orders of the production line is shortened, and thus the utilization of the production line is improved.

**Claims**

1. A battery production method, applied to a battery production system, wherein the battery production system comprises an upper-level computer, a production device in a first process, a station device in a second process, and a manufacturing execution system, and the method comprises:

   determining, by the upper-level computer, a quantity of first battery cells based on a current first production work order in a process of producing products by the production device in the first process of a battery production line, wherein the quantity of the first battery cells is a quantity of battery cells actually required for the current first production work order;
   determining, by the upper-level computer, a quantity of second battery cells, wherein the quantity of the second battery cells is a quantity of battery cells determined to be qualified for the current first production work order;
   when the quantity of the second battery cells is greater than or equal to the quantity of the first battery cells, sending, by the upper-level computer, a control instruction to a first production device in the first process, and taking a next first production work order as the current first production work order so as to complete switching of the first production work order, wherein the control instruction is used for the first production device to stop working;
   determining, by the manufacturing execution system, a quantity of unfinished battery packs on the station device for a current second production work order and sending the quantity of the unfinished battery packs to the station device in a process of producing products by the station device in the second process of the battery production line; and
   when the quantity of the unfinished battery packs is zero, taking, by the station device, a next second production work order as the current second production work order so as to complete switching of the second production work order.

2. The method according to claim 1, wherein
   the first production work order is a module production work order, and the second production work order is a battery pack production work order.

3. The method according to claim 2, wherein the first production device in the first process is a battery cell go-online device, a second production device in the first process is a battery cell code scanning device, and correspondingly, the quantity of the first battery cells is a quantity of battery cells actually required to go online for the current first production work order, and the quantity of the second battery cells is a quantity of battery cells determined to be qualified to go online through battery cell code scanning for the current first production work order.

4. The method according to claim 3, wherein the determining, by the upper-level computer, a quantity of first battery cells based on a current first production work order in a process of producing products by the production device in the first process of a battery production line, comprises:

   determining, by the upper-level computer, a quantity of third battery cells based on the current first production work order in the process of producing the products by the production device in the first process of the battery production line, wherein the quantity of the third battery cells is a quantity of battery cells theoretically required to go online for the current first production work order;
acquiring, by the upper-level computer, a quantity of fourth battery cells, wherein the quantity of the fourth battery cells is a quantity of unqualified battery cells in the process of producing the products by the production device in the first process for the current first production work order; and
determining, by the upper-level computer, a sum of the quantity of the third battery cells and the quantity of the fourth battery cells as the quantity of the first battery cells.

5. The method according to claim 4, wherein the determining, by the upper-level computer, a quantity of third battery cells based on the current first production work order in the process of producing the products by the production device in the first process of the battery production line comprises:
determining, by the upper-level computer, a product of a quantity of modules required in the current first production work order and a quantity of battery cells of a single module in the current first production work order as the quantity of the third battery cells in the process of producing the products by the production device in the first process of the battery production line.

6. The method according to claim 4, wherein the production device in the first process comprises a battery cell taping device and a module pressurizing device, and correspondingly, the acquiring, by the upper-level computer, a quantity of fourth battery cells comprises:

receiving, by the upper-level computer, a quantity of fifth battery cells sent by a programmable logic controller, wherein the quantity of the fifth battery cells is a quantity of unqualified battery cells in battery cell taping of the battery cell taping device for the current first production work order;
determining, by the upper-level computer, a quantity of sixth battery cells, wherein the quantity of the sixth battery cells is a quantity of battery cells contained in unqualified modules in a module pressurizing process of the module pressurizing device for the current first production work order; and
determining, by the upper-level computer, the quantity of the fifth battery cells or the quantity of the sixth battery cells as the quantity of the fourth battery cells.

7. The method according to claim 6, wherein the method further comprises:
determining, by the upper-level computer, a sum of the quantity of the fifth battery cells and the quantity of the sixth battery cells as the quantity of the fourth battery cells.

8. The method according to claim 6, wherein the determining, by the upper-level computer, a quantity of sixth battery cells comprises:

determining, by the upper-level computer, a quantity of the unqualified modules in the module pressurizing process of the module pressurizing device for the current first production work order; and
determining, by the upper-level computer, a product of the quantity of the unqualified modules and a quantity of battery cells of a single module in the current first production work order as the quantity of the sixth battery cells.

9. The method according to any one of claims 1 to 8, wherein when the quantity of the second battery cells is greater than or equal to the quantity of the first battery cells, the sending, by the upper-level computer, a control instruction to a first production device in the first process, and taking a next first production work order as the current first production work order so as to complete switching of the first production work order comprises:

when the quantity of the second battery cells is greater than or equal to the quantity of the first battery cells, sending, by the upper-level computer, the control instruction to the first production device in the first process, and sending a switching request for the first production work order to the manufacturing execution system;
acquiring, by the manufacturing execution system, the next first production work order based on the switching request for the first production work order, and sending the next first production work order to the upper-level computer; and
taking, by the upper-level computer, the next first production work order as the current first production work order so as to complete switching of the first production work order.

10. The method according to any one of claims 1 to 9, wherein the method further comprises:
after the sending, by the upper-level computer when the quantity of the second battery cells is greater than or equal to the quantity of the first battery cells, the control instruction to the first production device in the first process, and taking the next first production work order as the current first production work order so as to complete switching of the first production work order, returning to perform the determining, by the upper-level computer, a quantity of first battery cells based on a current first production work order in a process of producing products by a production device in the first process of a battery production line.

11. The method according to any one of claims 1 to 9, wherein the determining, by the manufacturing execution system, a quantity of unfinished battery packs on the station device for a current second production work order and sending the quantity of the unfinished battery packs to the station device in a process of producing products by the station device in the second process of the battery production line comprises:

 determining, by the manufacturing execution system, a quantity of finished battery packs on the station device for the current second production work order in the process of producing the products by the station device in the second process of the battery production line; and
 determining, by the manufacturing execution system, the quantity of the unfinished battery packs based on a quantity of battery packs required to be finished by the station device for the current second production work order and the quantity of the finished battery packs, and sending the quantity of the unfinished battery packs to the station device.

12. The method according to claim 11, wherein the determining, by the manufacturing execution system, a quantity of finished battery packs on the station device for the current second production work order in the process of producing the products by the station device in the second process of the battery production line comprises:

 separately scanning, by the station device, codes of the battery packs entering and leaving a station to obtain a quantity of battery packs entering and leaving the station;
 sending, by the station device, the quantity of the battery packs entering and leaving the station to the manufacturing execution system; and
 determining, by the manufacturing execution system, the quantity of the battery packs entering and leaving the station as the quantity of the finished battery packs.

13. The method according to any one of claims 1 to 12, wherein the taking, by the station device when the quantity of the unfinished battery packs is zero, a next second production work order as the current second production work order so as to complete switching of the second production work order comprises:

 when the quantity of the unfinished battery packs is zero, sending, by the station device, a switching request for the second production work order of the station device to the manufacturing execution system;
 acquiring, by the manufacturing execution system, the next second production work order based on the switching request for the second production work order of the station device, and sending the next second production work order to the station device; and
 taking, by the station device, the next second production work order as the current second production work order so as to complete switching of the second production work order.

14. A battery production system, comprising an upper-level computer, a production device in a first process, a station device in a second process, and a manufacturing execution system, wherein

 the upper-level computer is configured to determine a quantity of first battery cells based on a current first production work order in a process of producing products by the production device in the first process of a battery production line, wherein the quantity of the first battery cells is a quantity of battery cells actually required for the current first production work order;
 the upper-level computer is configured to determine a quantity of second battery cells, wherein the quantity of the second battery cells is a quantity of battery cells determined to be qualified for the current first production work order;
 the upper-level computer is configured to: when the quantity of the second battery cells is greater than or equal to the quantity of the first battery cells, send a control instruction to a first production device in the first process, and take a next first production work order as the current first production work order so as to complete switching of the first production work order, wherein the control instruction is used for the first production device to stop working;
 the manufacturing execution system is configured to determine a quantity of unfinished battery packs on the station device for a current second production work order and send the quantity of the unfinished battery packs to the station device in a process of producing products by the station device in the second process of the battery production line; and

the station device is configured to: when the quantity of the unfinished battery packs is zero, take a next second production work order as the current second production work order so as to complete switching of the second production work order.

15. The system according to claim 14, wherein the first production work order is a module production work order, and the second production work order is a battery pack production work order.

16. The system according to claim 15, wherein the first production device in the first process is a battery cell go-online device, a second production device in the first process is a battery cell code scanning device, and correspondingly, the quantity of the first battery cells is a quantity of battery cells actually required to go online for the current first production work order, and the quantity of the second battery cells is a quantity of battery cells determined to be qualified to go online through battery cell code scanning for the current first production work order.

17. The system according to claim 16, wherein the upper-level computer is further configured to:

determine a quantity of third battery cells based on the current first production work order in the process of producing the products by the production device in the first process of the battery production line, wherein the quantity of the third battery cells is a quantity of battery cells theoretically required to go online for the current first production work order;
acquire a quantity of fourth battery cells, wherein the quantity of the fourth battery cells is a quantity of unqualified battery cells in the process of producing the products by the production device in the first process for the current first production work order; and
determine a sum of the quantity of the third battery cells and the quantity of the fourth battery cells as the quantity of the first battery cells.

18. The system according to claim 17, wherein the upper-level computer is further configured to:
determine a product of a quantity of modules required in the current first production work order and a quantity of battery cells of a single module in the current first production work order as the quantity of the third battery cells in the process of producing the products by the production device in the first process of the battery production line.

19. The system according to claim 17, wherein the production device in the first process comprises a battery cell taping device and a module pressurizing device, and correspondingly, the upper-level computer is further configured to:

receive a quantity of fifth battery cells sent by a programmable logic controller, wherein the quantity of the fifth battery cells is a quantity of unqualified battery cells in battery cell taping of the battery cell taping device for the current first production work order;
determine a quantity of sixth battery cells, wherein the quantity of the sixth battery cells is a quantity of battery cells contained in unqualified modules in a module pressurizing process of the module pressurizing device for the current first production work order; and
determine the quantity of the fifth battery cells or the quantity of the sixth battery cells as the quantity of the fourth battery cells.

20. The system according to claim 19, wherein the upper-level computer is further configured to:
determine a sum of the quantity of the fifth battery cells and the quantity of the sixth battery cells as the quantity of the fourth battery cells.

21. The system according to claim 19, wherein the upper-level computer is further configured to:

determine a quantity of unqualified modules in the module pressurizing process of the module pressurizing device for the current first production work order; and
determine a product of the quantity of the unqualified modules and a quantity of battery cells of a single module in the current first production work order as the quantity of the sixth battery cells.

22. The system according to any one of claims 14 to 21, wherein

the upper-level computer is further configured to: when the quantity of the second battery cells is greater than or equal to the quantity of the first battery cells, send the control instruction to the first production device in the first process, and send a switching request for the first production work order to the manufacturing execution system;

the manufacturing execution system is further configured to acquire the next first production work order based on the switching request for the first production work order, and send the next first production work order to the upper-level computer; and

the upper-level computer is further configured to take the next first production work order as the current first production work order so as to complete switching of the first production work order.

23. The system according to any one of claims 14 to 22, wherein the upper-level computer is further configured to: after the sending, when the quantity of the second battery cells is greater than or equal to the quantity of the first battery cells, the control instruction to the first production device in the first process, and taking the next first production work order as the current first production work order so as to complete switching of the first production work order, return to perform the determining the quantity of the first battery cells based on the current first production work order in the process of producing the products by the production device in the first process of the battery production line.

24. The system according to any one of claims 14 to 22, wherein the manufacturing execution system is further configured to:

determine a quantity of finished battery packs on the station device for the current second production work order in the process of producing the products by the station device in the second process of the battery production line; and

determine the quantity of the unfinished battery packs based on a quantity of battery packs required to be finished by the station device for the current second production work order and the quantity of the finished battery packs, and send the quantity of the unfinished battery packs to the station device.

25. The system according to claim 24, wherein

the station device is further configured to separately scan codes of the battery packs entering and leaving a station to obtain a quantity of battery packs entering and leaving the station, and send the quantity of battery packs entering and leaving the station to the manufacturing execution system; and

the manufacturing execution system is further configured to determine the quantity of the battery packs entering and leaving the station as the quantity of the finished battery packs.

26. The system according to any one of claims 14 to 25, wherein

the station device is further configured to: when the quantity of the unfinished battery packs is zero, send a switching request for the second production work order of the station device to the manufacturing execution system;

the manufacturing execution system is further configured to acquire the next second production work order based on the switching request for the second production work order of the station device, and send the next second production work order to the station device; and

the station device is further configured to take the next second production work order as the current second production work order so as to complete switching of the second production work order.

Enable battery cells online — S101

Scan codes of battery cells — S102

Perform side taping — S103

Perform side taping detection — S104

Stack battery cells — S105

Pressurize modules — S106

Scan codes of modules — S107

FIG. 1

Enable a lower case online — S201

Install a water-cooled flange — S202

Install a balance valve — S203

Glue the lower case — S204

Perform gluing detection — S205

Put the modules into the case — S206

Pre-screw the modules — S207

Tighten the modules — S208

Perform pole addressing — S209

Install a CCS — S210

Perform BSB welding — S211

Perform post-welding detection — S212

Weigh and enable offline — S225

Perform appearance detection — S224

Perform DCR testing — S223

Perform EOL testing — S222

Perform air tightness testing — S221

Tighten an upper cover — S220

Install a gasket — S219

Strap a tape — S218

Install an SBOX upper cover — S217

Install PACK high voltage — S216

Install a low-voltage wire harness — S215

Install an SBOX — S214

Stick an insulating film — S213

FIG. 2

Battery production system 300

FIG. 3

An upper-level computer determines a quantity of first battery cells based on a current first production work order in a process of producing products by a production device in a first process of a battery production line — S401

The upper-level computer determines a quantity of second battery cells — S402

When the quantity of the second battery cells is greater than or equal to the quantity of the first battery cells, the upper-level computer sends a control instruction to a first production device in the first process, and taks a next first production work order as the current first production work order so as to complete switching of the first production work order — S403

A manufacturing execution system determines a quantity of unfinished battery packs on a station device for a current second production work order and sends the quantity of the unfinished battery packs to the station device in a process of producing products by the station device in a second process of the battery production line — S404

When the quantity of the unfinished battery packs is zero, the station device takes a next second production work order as the current second production work order so as to complete switching of the second production work order — S405

FIG. 4

An upper-level computer calculats a quantity D of battery cells theoretically required to go online according to a quantity of modules required by a current module production work order — S501

The upper-level computer calculates a quantity of battery cells actually required to go online — S502

When A is greater than or equal to E, the upper-level computer stops a battery cell go-online device from grabbing materials and applies for switching to a preset module work order — S503

An MES receives an the application from the upper-level computer and issues the preset module work order — S504

The upper-level computer clears B, C, D and E — S505

FIG. 5

| | |
|---|---|
| An MES records a quantity of finished PACKs on a station device | S601 |

↓

| | |
|---|---|
| When it is determined that the quantity of the unfinished PACKs is zero, the station device applies for switching to a preset PACK work order | S602 |

↓

| | |
|---|---|
| The MES acquires the preset PACK work order based on a switching request and sends the preset PACK work order to the station device | S603 |

↓

| | |
|---|---|
| The station device switches from a current PACK production work order to the preset PACK work order | S604 |

FIG. 6

**EP 4 603 932 A1**

# INTERNATIONAL SEARCH REPORT

| International application No. |
|---|
| **PCT/CN2023/140420** |

**A. CLASSIFICATION OF SUBJECT MATTER**

G05B19/418(2006.01)i；H01M10/04(2006.01)i

According to International Patent Classification (IPC) or to both national classification and IPC

**B. FIELDS SEARCHED**

Minimum documentation searched (classification system followed by classification symbols)

IPC:G05B19/-，H01M10/-，G06Q10/- CPC: G05B19/41865,G05B2219/32252

Documentation searched other than minimum documentation to the extent that such documents are included in the fields searched

Electronic data base consulted during the international search (name of data base and, where practicable, search terms used)

CNTXT, ENTXTC, VEN, ENTXT, CNKI: 电池, 电芯, 电池单体, 电池模组, 电池包, 电池箱, 产线, 装配, 组装, 工序, 生产, 工单, 订单, 良品, 合格, 切换, 换型, 生产执行系统, 数量, 个数, 总数, 总量, battery, model, cell, PACK, production, line, assembl+, process, work order, work station, qualified, switch, MES, number, amount

**C. DOCUMENTS CONSIDERED TO BE RELEVANT**

| Category* | Citation of document, with indication, where appropriate, of the relevant passages | Relevant to claim No. |
|---|---|---|
| Y | 王飞 等 (WANG, Fei et al.). "动力电池模组和PACK装配线的工艺技术应用研究 (Application Research of Power Battery Module and PACK Assembly Line)" 蓄电池 (Chinese Labat Man), Vol. 60, No. 2, 18 April 2023 (2023-04-18), 82-86 ISSN: 1006-0847, page 83, paragraph 2 to page 86, paragraph 1 | 1-26 |
| Y | CN 114648225 A (GREE ELECTRIC APPLIANCES INC. OF ZHUHAI) 21 June 2022 (2022-06-21) description, paragraphs [0032]-[0056], and figures 1-2 | 1-26 |
| Y | CN 106155018 A (BOZHON (SUZHOU) PRECISION INDUSTRY TECHNOLOGY CO., LTD.) 23 November 2016 (2016-11-23) description, paragraphs [0029]-[0037] | 1-26 |
| PX | CN 116974256 A (CONTEMPORARY AMPEREX TECHNOLOGY CO., LTD.) 31 October 2023 (2023-10-31) description, paragraphs [0058]-[0186], and figures 1-6 | 1-26 |

☑ Further documents are listed in the continuation of Box C. ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **23 June 2024** | **23 June 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/140420** |

## C. DOCUMENTS CONSIDERED TO BE RELEVANT

| Category* | Citation of document, with indication, where appropriate, of the relevant passages | Relevant to claim No. |
| --- | --- | --- |
| A | CN 113655760 A (NINGBO VEKEN BATTERY CO., LTD.) 16 November 2021 (2021-11-16)<br>entire document | 1-26 |
| A | JP 2000343353 A (KONISHIROKU PHOTO INDUSTRY CO., LTD.) 12 December 2000 (2000-12-12)<br>entire document | 1-26 |
| A | CN 112596476 A (SICHUAN CHANGHONG INTELLIGENT MANUFACTURING TECHNOLOGY CO., LTD.) 02 April 2021 (2021-04-02)<br>entire document | 1-26 |

Form PCT/ISA/210 (second sheet) (July 2022)

**INTERNATIONAL SEARCH REPORT**
**Information on patent family members**

International application No.

**PCT/CN2023/140420**

| Patent document cited in search report | | | Publication date (day/month/year) | Patent family member(s) | | | Publication date (day/month/year) |
|---|---|---|---|---|---|---|---|
| CN | 114648225 | A | 21 June 2022 | None | | | |
| CN | 106155018 | A | 23 November 2016 | CN | 106155018 | B | 08 January 2019 |
| CN | 116974256 | A | 31 October 2023 | None | | | |
| CN | 113655760 | A | 16 November 2021 | None | | | |
| JP | 2000343353 | A | 12 December 2000 | None | | | |
| CN | 112596476 | A | 02 April 2021 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311233416